# EUROPÄISCHE PATENTANMELDUNG

(11) **EP 2 696 173 A1**
(43) Veröffentlichungstag der Anmeldung: **12.02.2014**
(21) Anmeldenummer: 12005820.1
(22) Anmeldetag: 10.08.2012
(51) Int. Cl.: G01D 21/00, E01C 19/00, E02F 3/84

(54) **Baumaschine mit Sensoreinheit**

(71) Anmelder: Joseph Vögele AG, 67067 Ludwigshafen (DE)
(72) Erfinder: Eul, Achim, 68305 Mannheim (DE); Herrmann, Jens, 67378 Zeiskam (DE)
(74) Vertreter: Grünecker, Kinkeldey, Stockmair & Schwanhäusser

(57) **Zusammenfassung**

Die Erfindung bezieht sich auf eine Baumaschine (1) mit mindestens einer Sensoreinheit (9), die unterschiedliche Messzustände einnehmen kann, und mindestens einer räumlich davon getrennten Bedienvorrichtung (2, 7), mit der ein Messzustand der Sensoreinheit (9) steuerbar ist. Die Erfindung zeichnet sich dadurch aus, dass an der Sensoreinheit (9) ein zusätzliches Bedienelement (13) angeordnet ist und der Messzustand der Sensoreinheit (9) sowohl durch die mindestens eine Bedienvorrichtung (2, 7), als auch durch das Bedienelement (13) an der mindestens einen Sensoreinheit (9) steuerbar ist.

Die Erfindung bezieht sich außerdem auf ein Verfahren zur Steuerung mindestens einer Sensoreinheit (9), die unterschiedliche Messzustände einnehmen kann, an einer Baumaschine (1). Das Verfahren zeichnet sich dadurch aus, dass der Messzustand der mindestens einen Sensoreinheit (9) sowohl durch mindestens eine räumlich von ihr getrennte Bedienvorrichtung (2, 7) als auch durch ein Bedienelement (13), das an der Sensoreinheit (9) selbst angeordnet ist, gesteuert wird.

## Beschreibung

Die Erfindung betrifft Baumaschinen gemäß dem Oberbegriff des Anspruchs 1 sowie Verfahren zur Steuerung von Sensoreinheiten an solchen Baumaschinen gemäß Anspruch 11.

Solche Baumaschinen sind aus der Praxis bekannt. Die Sensoreinheiten dienen dabei der Überwachung verschiedener Betriebsparameter der Baumaschine und ihres Arbeitsergebnisses. Darüber hinaus können anhand der gewonnenen Daten verschiedene Betriebsparameter der Baumaschine angepasst werden, um so ein möglichst gutes Arbeitsergebnis zu erzielen.

Nachteilig an den herkömmlichen Baumaschinen ist, dass das Konzept zur Bedienung der Sensoreinheiten auf ein bestimmtes Einsatzszenario zugeschnitten ist. Abweichende Szenarien, verschiedene Baustellensituationen sowie unterschiedliche Arbeitsweisen der Bediener können so nicht berücksichtigt werden.

Aufgabe der vorliegenden Erfindung ist es, eine Baumaschine mit mindestens einer Sensoreinheit zur Verfügung zu stellen, die mit konstruktiv möglichst einfachen Mitteln eine Anpassung des Bedienkonzepts an die vorgenannten Faktoren ermöglicht.

Diese Aufgabe wird gelöst durch eine Baumaschine mit den Merkmalen des Anspruchs 1 sowie durch ein Verfahren mit den Merkmalen des Anspruchs 11. Vorteilhafte Weiterbildungen sind in den jeweiligen Unteransprüchen angegeben.

Die efindungsgemäße Baumaschine zeichnet sich dadurch aus, dass die eingesetzten Sensoreinheiten sowohl durch eine oder mehrere, räumlich von ihr getrennte Bedienvorrichtungen, als auch durch ein an der Sensoreinheit selbst angebrachtes Bedienelement steuerbar sind. Dadurch wird die Bedienung der Baumaschine deutlich flexibler. Eine Festlegung auf ein bestimmtes Bedienkonzept ist somit nicht mehr notwendig. Vielmehr wird es dem Bediener ermöglicht, die Bedienung situationsangepasst und entsprechend seinen Vorstellungen zu gestalten. Für den Nutzer der Baumaschine ergeben sich dadurch die Vorteile eines effizienteren Betriebs und, durch Vermeidung von Bedienfehlern, eines qualitativ besseren Arbeitsergebnisses. Auch für den Hersteller können sich, neben dem erhöhten Kundennutzen, Vorteile ergeben. Dadurch, dass mit ein und derselben Maschinenkonfiguration mehrere Bedienkonzepte abgedeckt werden können, kann beispielsweise die Variantenvielfalt reduziert werden.

Vorteilhaft ist es, wenn der Messzustand der Sensoreinheit relativ zum aktuellen Messzustand steuerbar ist. Dadurch wird z.B. ermöglicht, dass ein Bediener der Maschine auf Situationsänderungen flexibel reagieren kann, ohne den jeweils aktuellen Messzustand der Sensoreinheit zu kennen. Dies kann insbesondere bei der Bedienung von großen Maschinen durch mehrere Bediener von Vorteil sein.

Messzustand steht hierbei stellvertretend für sämtliche veränderbaren Parameter der jeweiligen Sensoreinheit, wie etwa Regelgrößen, Sollwerte aber auch Abtastraten oder Empfindlichkeiten. Beispielhaft, jedoch nicht einschränkend, seien hier intelligente Sensoreinheiten genannt, die bereits einen Sollwertabgleich durchführen. So kann bei einem Abstandssensor der Sollabstand inkrementell verändert werden, ohne einen neuen absoluten Soll abstand einzustellen. Ähnliches gilt beispielsweise für Nivellier-, Temperatur-, Helligkeits- oder etwa Drucksensoren. Ein weiteres nicht einschränkendes Beispiel sind Sensoreinheiten, deren Messprinzip auf Wellenphänomenen beruhen, wie z.B. Ultraschallsensoren. Hier können beispielsweise die Wellenfrequenz und Wellenamplitude oder bei Ultraschall die Größe der Ultraschallkeule vom aktuellen Zustand ausgehend inkrementell angepasst werden, ohne einen Absolutwert eingeben zu müssen.

Zweckmäßig ist es, wenn der Messzustand der Sensoreinheit durch einen zentralen Speicher speichbar ist. Eine Synchronisierung von mehreren Speichern ist damit überflüssig, trotz der Bedienbarkeit der Sensoreinheit von mehreren Orten.

Besonders günstig ist es, wenn ein Prüfungsblock vorgesehen und dazu konfiguriert ist, die Steuereingaben vor deren Umsetzung einem Prüfungsverfahren zu unterziehen. Damit werden Konflikte zwischen von unterschiedlichen Orten aus getätigten Eingaben vermieden, z.B. indem sie hierarchisch geordnet werden. So kann eine Eingabe, die an der Sensoreinheit getätigt wurde, in der Hierarchie über den Eingaben, die an einer der Bedienvorrichtungen getätigt wurden, eingeordnet werden und umgekehrt. Die Hierarchie kann jedoch auch anhand von anderen Kriterien, z.B. Eingabezeit, Richtung der Änderung oder aber anhand von Kombinationen von verschiedenen Kriterien geordnet werden. Das System kann derart konfiguriert sein, dass Eingaben in Abhängigkeit von ihrer Hierarchie umgesetzt werden, z.B. dass bei gleichzeitig oder fast gleichzeitig getätigten Steuereingaben nur diejenige umgesetzt wird, die in der Hierarchie höher eingeordnet ist.

Die Sensoreinheit kann z.B. einen Abstandssensor umfassen.

In einer weiteren Variante der Erfindung umfasst die Sensoreinheit einen Ultraschallsensor. Diese bieten den Vorteil, dass sie berührungslos, beispielsweise mit Hilfe von Laufzeitmessung, verschiedene Messungen durchführen können. Dazu gehören z.B. Abstände, Schichtdicken oder Flussgeschwindigkeiten.

Denkbar ist es, dass die Sensoreinheit als Materialsensor einsetzbar ist, der den Materialvorrat an einem bestimmten Ort an, in oder in der Umgebung der Maschine erfassen kann. Dies kann z.B. durch die Messung von Abständen, Füllhöhen oder aber Gewichten erfolgen. Ebenso ist es vorstellbar, dass die Sensoreinheit z. B. als Nivellier- bzw. Höhensensor für eine Höhensteuerung einsetzbar ist.

Zur Betätigung kann das Bedienelement beispielsweise eine Tasteranordnung oder ein Potentiometer umfassen.

Die Bedienvorrichtung kann zur Steuerung des Messzustandes der Sensoreinheit beispielsweise ebenfalls ein Potentiometer oder eine Tasteranordnung aufweisen.

In beiden Fällen ist es zweckmäßig, wenn die Tasteranordnung einen Taster für jede mögliche Veränderungsrichtung aufweist, so z.B. bei der Veränderung eines Sollwerts einen Taster zur Erhöhung und einen zur Herabsetzung des Sollwerts. Ebenso ist es zweckmäßig, bei Verwendung eines Potentiometers jeder Drehrichtung eine bestimmte Veränderungsrichtung zuzuordnen.

Bei der Baumaschine kann es sich z.B. um einen Straßenfertiger oder einen Beschicker handeln.

Die Erfindung bezieht sich auch auf ein Verfahren zur Steuerung von mindestens einer Sensoreinheit, die unterschiedliche Messzustände einnehmen kann, an einer Baumaschine. Bei dem Verfahren wird der Messzustand der mindestens einen Sensoreinheit sowohl durch mindestens eine räumlich von ihr getrennte Bedienvorrichtung, als auch durch ein Bedienelement, das an der Sensoreinheit selbst angeordnet ist, gesteuert.

Vorzugsweise erfolgt die Steuerung der mindestens einen Sensoreinheit relativ zu einem aktuellen Messzustand, sodass der Messzustand inkrementell verändert werden kann, im Gegensatz zu einer Eingabe von Absolutwerten.

Vorteilhaft ist es, wenn der aktuelle Messzustand der mindestens einen Sensoreinheit zentral gespeichert wird.

Besonders günstig ist es, wenn die Steuereingaben ein Prüfungsverfahren durchlaufen, bevor sie umgesetzt werden, um so Konflikte zwischen verschiedenen Steuereingaben zu vermeiden.

In einer weiteren, vorteilhaften Variante der Erfindung misst die mindestens eine Sensoreinheit einen Abstand, vorzugsweise unter Verwendung von Ultraschall. Sie kann jedoch ebenso z. B. eine Höhe, eine Neigung, eine Temperatur, eine Helligkeit oder einen Druck messen.

Die Erfindung bezieht sich auf Baumaschinen mit mindestens einer Sensoreinheit sowie auf ein Verfahren zur Steuerung von mindestens einer Sensoreinheit an einer Baumaschine der vorstehend beschriebenen Art.

Im Folgenden wird ein vorteilhaftes Ausführungsbeispiel der Erfindung anhand von Zeichnungen näher erläutert.
- Figur 1: zeigt eine Seitenansicht einer Baumaschine, in diesem Beispiel eines Straßenfertigers. Es kann sich jedoch auch um eine andere Baumaschine handeln.
- Figur 2: zeigt eine Draufsicht einer Bedienvorrichtung zur Steuerung von Sensoreinheiten an einer Baumaschine.
- Figur 3: zeigt eine perspektivische Ansicht einer Sensoreinheit mit Bedienelement.
- Figur 4: zeigt eine schematische Darstellung des Signalflusses zwischen den verschiedenen Systemkomponenten.

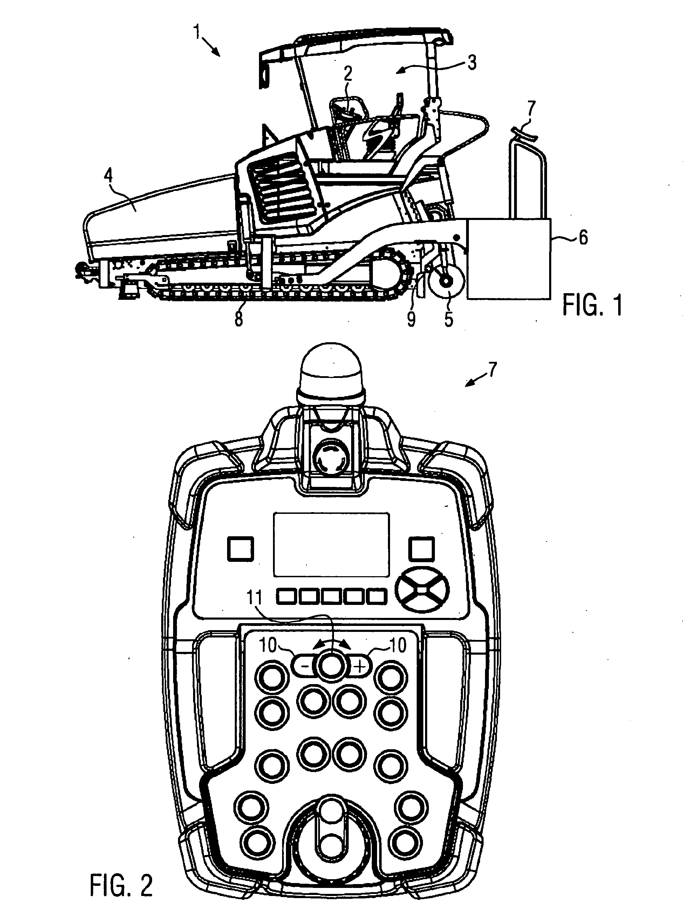

Im dargestellten Ausführungsbeispiel umfasst die in Figur 1 dargestellte Baumaschine 1 eine Bedienvorrichtung 2 in Form eines Bedienpults, das im Bereich des Fahrerstandes 3 angeordnet ist. Bei der Baumaschine 1 handelt es sich um einen Straßenfertiger. Dieser wird beim Einbau von Straßenbelägen eingesetzt. Dazu wird von einem vorausfahrenden Fahrzeug, z.B. einem Beschicker, ein sogenanntes Mischgut in einem Gutbunker 4 deponiert. Das Mischgut wird von hier nicht dargestellten, sogenannten Kratzerbändern unter dem Fahrerstand 3 hindurch zu einer Materialverteilerschnecke 5 gefördert. Diese verteilt das Mischgut auf die gewünschte Einbaubreite. Anschließend wird es durch eine Bohle 6 verdichtet und eingeebnet.

An der Bohle 6 ist eine zweite Bedienvorrichtung 7 in Form eines Außensteuerstandes angebracht. Der Straßenfertiger 1 wird von einem Kettentrieb 8 angetrieben. Eine Sensoreinheit 9 ist in diesem Ausführungsbeispiel als Materialsensor im Bereich der Materialverteilschnecke 5 angeordnet. In diesem Fall dient die Sensoreinheit 9 dazu, die Materialmenge, die sich vor der Materialverteilschnecke 5 befindet, zu erfassen. Anhand der gewonnenen Messwerte wird dann der Betrieb der Materialverteilschnecke 5 geregelt. Eine Sensoreinheit 9 kann jedoch im Rahmen der Erfindung zu jedem beliebigen Zweck an jedem beliebigen Ort der Baumaschine 1 eingesetzt werden.

Figur 2 zeigt die zweite Bedienvorrichtung 7, auf der sowohl eine Tasteranordnung 10, als auch ein Potentiometer 11 zur Steuerung der Sensoreinheit 9 angeordnet ist. Ebenso gut kann jedoch auch nur eine der beiden Komponenten Verwendung finden.

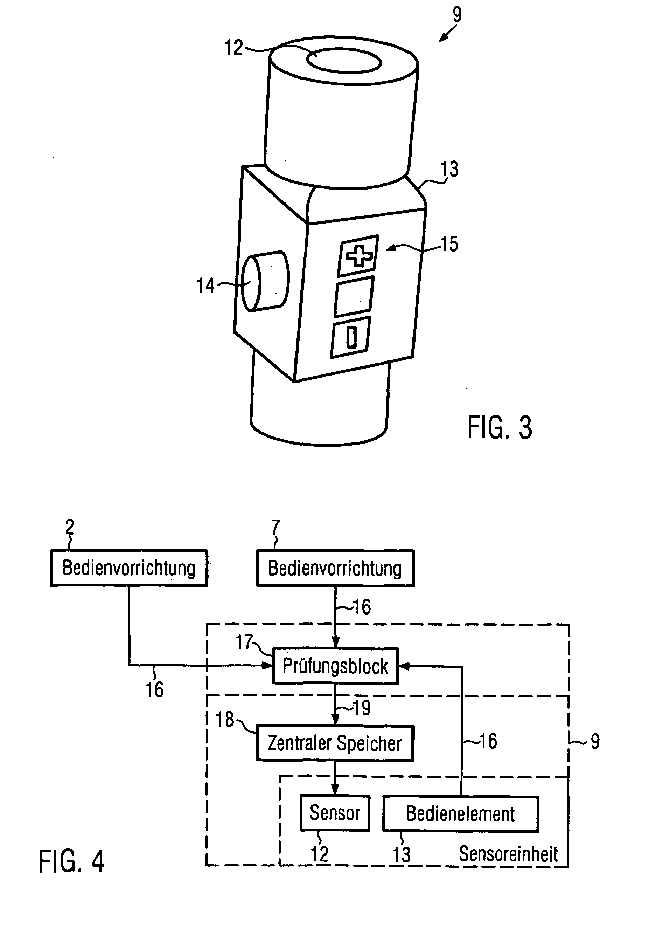

Figur 3 zeigt die Sensoreinheit 9 im Detail. Im vorliegenden Ausführungsbeispiel umfasst sie einen Abstandssensor 12, der als Ultraschallsensor ausgeführt ist. Sie kann jedoch auch eine beliebige andere Art von Sensor mit einem beliebigen Messprinzip umfassen. Darüber hinaus weist die Sensoreinheit 9 ein Bedienelement 13 auf, an dem sowohl ein Potentiometer 14, als auch eine Tasteranordnung 15 zur Betätigung vorgesehen ist. Wie schon bei der Bedienvorrichtung 7 kann jedoch auch hier alternativ nur eines der beiden Verwendung finden.

In Figur 4 ist der Signalfluss zwischen den verschiedenen Systemkomponenten schematisch dargestellt. In diesem Ausführungsbeispiel sind zwei Bedienvorrichtungen 2, 7 vorgesehen. Steuereingaben 16 werden von einer der Bedienvorrichtungen 2, 7 oder aber von dem Bedienelement 13 an der Sensoreinheit 9 erzeugt und an einen Prüfungsblock 17 weitergegeben. Gegebenenfalls auftretende Konflikte zwischen den verschiedenen Steuereingaben 16 werden dort behoben. Dazu werden bei gleichzeitig oder fast gleichzeitig getätigten Steuereingaben die an der Sensoreinheit 9 getätigten Eingaben bevorzugt umgesetzt. Alternativ kann vor Einbaubeginn eine der Bedienvorrichtungen 2, 7 ausgewählt werden, deren Eingaben bevorzugt behandelt werden. So kann je nach Situation entschieden werden, welcher Bediener den besten Blick hat. Danach wird der Messzustand der Sensoreinheit 9 in einem zentralen Speicher 18 anhand eines Ausgangssignals 19 des Prüfungsblocks 17 verändert. Anschließend wird der Messzustand der Sensoreinheit 9 entsprechend dem nun im zentralen Speicher 18 hinterlegten Zustand eingestellt.

Die gestrichelten Linien stellen verschiedene Möglichkeiten für die Gehäuseanordnung der verschiedenen Komponenten dar. Demnach sind der Sensor 12 sowie das Bedienelement 13 in einem gemeinsamen Gehäuse zur Sensoreinheit 9 zusammengefasst. Außerdem ist es möglich, den zentralen Speicher 18 und/oder den Prüfungsblock 17 im selben Gehäuse anzuordnen. Die Bedienvorrichtungen 2, 7 sind jedoch in jedem Fall räumlich getrennt von der Sensoreinheit 9.

In einer weiteren Variante sind mehrere Sensoreinheiten 9 entlang der Materialverteilschnecke 5 angeordnet. Bei großen Einbaubreiten kann so die Materialmenge vor der Materialschnecke 5 feiner gesteuert werden.

Eine weitere Variante stellt ein Straßenfertiger 1 dar, bei dem die Sensoreinheit 9 die Temperatur des Mischguts bzw. des Materials misst. Erkennt ein Bediener, der sich auf der Bohle 6 befindet, eine Abkühlung des Materials, kann er direkt vom Außensteuerstand 7 Anpassungen vornehmen, ohne dazu in den Fahrerstand 3 steigen zu müssen, oder einem dort befindlichen Kollegen bescheid zu sagen.

In weiteren Varianten kann die Baumaschine 1 ein Straßenfertiger oder ein Beschicker sein, bei dem die Sensoreinheit 9 die Fahrgeschwindigkeit misst.

In einer zusätzlichen Variante ist die Baumaschine 1 ein Beschicker, bei dem die Sensoreinheit 9 die Fördergeschwindigkeit, mit der das Mischgut im Gutbunker 4 des Straßenfertigers deponiert wird, misst. Dabei ist eine Bedienvorrichtung 2, 7 an einer Position an dem Beschicker angebracht, von der aus ein Bediener den Gutbunker 4 des folgenden Straßenfertigers beobachten kann. Der Bediener kann dadurch die Fördergeschwindigkeit an den Füllstand des Gutbunkers 4 anpassen.

In einer weiteren Variante kann die Baumaschine 1 ein Straßenfertiger oder ein Beschicker sein, bei dem die Sensoreinheit 9 die Höhe mittels Höhensensor misst.

## Patentansprüche

1. Baumaschine (1) mit mindestens einer Sensoreinheit (9), die unterschiedliche Messzustände einnehmen kann, und mindestens einer räumlich davon getrennten Bedienvorrichtung (2, 7), mit der ein Messzustand der Sensoreinheit (9) steuerbar ist,
**dadurch gekennzeichnet, dass** an der Sensoreinheit (9) ein zusätzliches Bedienelement (13) angeordnet ist und der Messzustand der Sensoreinheit (9) sowohl durch die mindestens eine Bedienvorrichtung (2, 7), als auch durch das Bedienelement (13) an der mindestens einen Sensoreinheit (9) steuerbar ist.

2. Baumaschine nach Anspruch 1, **dadurch gekennzeichnet, dass** die mindestens eine Sensoreinheit (9) relativ zu dem aktuellen Messzustand steuerbar ist.

3. Baumaschine nach einem der vorangehenden Ansprüche, **dadurch gekennzeichnet, dass** der Messzustand der mindestens einen Sensoreinheit (9) durch einen zentralen Speicher (18) speicherbar ist.

4. Baumaschine nach einem der vorangehenden Ansprüche, **gekennzeichnet durch** einen Prüfungsblock (17), der dazu konfiguriert ist, die Steuereingaben (16) vor deren Umsetzung einem Prüfungsverfahren zu unterziehen.

5. Baumaschine nach einem der vorangehenden Ansprüche, **dadurch gekennzeichnet, dass** die mindestens eine Sensoreinheit (9) einen Abstandssensor (12) umfasst.

6. Baumaschine nach einem der vorangehenden Ansprüche, **dadurch gekennzeichnet, dass** die mindestens eine Sensoreinheit (9) einen Ultraschallsensor (8) umfasst.

7. Baumaschine nach einem der vorangehenden Ansprüche, **dadurch gekennzeichnet, dass** die mindestens eine Sensoreinheit (9) als Materialsensor oder als Höhensensor einsetzbar ist.

8. Baumaschine nach einem der vorangehenden Ansprüche, **dadurch gekennzeichnet, dass** das Bedienelement (13) eine Tasteranordnung (15) und/oder ein Potentiometer (14) umfasst.

9. Baumaschine nach einem der vorangehenden Ansprüche, **dadurch gekennzeichnet, dass** die mindestens eine Bedienvorrichtung (2,7) ein Potentiometer (11) und/oder eine Tasteranordnung (10) zur Steuerung des Messzustandes der Sensoreinheit (9) umfasst.

10. Baumaschine nach einem der vorangehenden Ansprüche, **dadurch gekennzeichnet, dass** die Baumaschine (1) ein Straßenfertiger oder ein Beschicker ist.

11. Verfahren zur Steuerung von mindestens einer Sensoreinheit (9), die unterschiedliche Messzustände einnehmen kann, an einer Baumaschine (1),
**dadurch gekennzeichnet, dass** der Messzustand der mindestens einen Sensoreinheit (9) sowohl durch mindestens eine räumlich von ihr getrennte Bedienvorrichtung (2, 7), als auch durch ein Bedienelement (13), das an der Sensoreinheit (9) selbst angeordnet ist, gesteuert wird.

12. Verfahren nach Anspruch 11, **dadurch gekennzeichnet, dass** die Steuerung der mindestens einen Sensoreinheit (9) relativ zu einem aktuellen Messzustand erfolgt.

13. Verfahren nach Anspruch 11 oder 12, **dadurch gekennzeichnet, dass** der aktuelle Messzustand der mindestens einen Sensoreinheit (9) zentral gespeichert ist.

14. Verfahren nach Anspruch 11, 12 oder 13, **dadurch gekennzeichnet, dass** die Steuereingaben (16) ein Prüfungsverfahren durchlaufen, bevor sie umgesetzt werden.

15. Verfahren nach einem der Ansprüche 11-14, **dadurch gekennzeichnet, dass** die mindestens eine Sensoreinheit (9) einen Abstand misst, vorzugsweise unter Verwendung von Ultraschall.
